(19) Europäisches Patentamt / European Patent Office / Office européen des brevets

(11) EP 2 634 713 A2

(12) **EUROPEAN PATENT APPLICATION**
published in accordance with Art. 153(4) EPC

(43) Date of publication:
**04.09.2013 Bulletin 2013/36**

(21) Application number: **11836652.5**

(22) Date of filing: **28.10.2011**

(51) Int Cl.:
***G06F 19/00*** *(2011.01)* ***G06N 5/04*** *(2006.01)*

(86) International application number:
**PCT/KR2011/008121**

(87) International publication number:
**WO 2012/057560 (03.05.2012 Gazette 2012/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.10.2011 KR 20110110700**
**28.10.2010 KR 20100106313**

(71) Applicant: **Acriil Inc.**
**Gangnam-gu, Seoul 135-816 (KR)**

(72) Inventors:
- **PARK, Wei Jin**
  **Seoul 137-941 (KR)**
- **LEE, Se Hwa**
  **Seoul 137-941 (KR)**
- **PARK, Jina**
  **Seoul 137-941 (KR)**
- **YEOM, Ik Jun**
  **Seoul 135-796 (KR)**
- **HWANG, Seung Won**
  **Seoul 138-200 (KR)**

(74) Representative: **Thorniley, Peter et al**
**Kilburn & Strode LLP**
**20 Red Lion Street**
**London WC1R 4PJ (GB)**

(54) **INTELLIGENT EMOTIONAL WORD EXPANDING APPARATUS, AND EXPANDING METHOD THEREFOR**

(57) The present disclosure provides an intelligent emotional word expanding apparatus and an expanding method therefor. The intelligent emotional word expanding apparatus includes word dictionary storing module, emotion inferring module and word expanding module. The word dictionary storing module classifies emotional words into similarity, positivity or negativity, and emotional intensity using emotion classes including a basic emotion group classifying human emotions and a detailed emotion group classifying the basic emotion group, storing the classified emotional words in emotional word dictionary, and storing neutral words together with the number of calls thereof in neutral word dictionary. Emotion inferring module captures words and phrases of a sentence logged by a user, converting the words and phrases into basic formats, and inferring emotions. Word expanding module determines whether a word or a phrase is neutral on the basis of the neutral word dictionary when emotions are not inferred by the emotion inferring module.

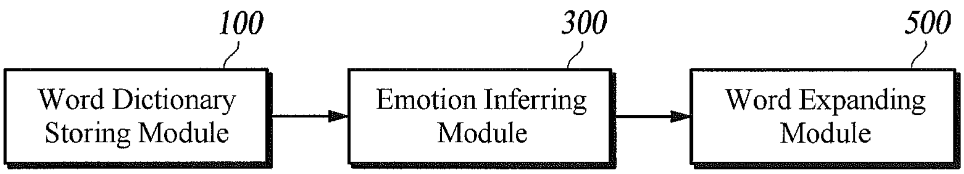


*FIG. 1*

EP 2 634 713 A2

## Description

[Technical Field]

The present disclosure in some embodiments relates to an intelligent emotional word expanding apparatus and an expanding method therefor. More particularly, the present disclosure relates to an intelligent emotional word expanding apparatus and an expanding method therefor, capable of expanding an emotional word intelligently, in an intelligent emotion inferring apparatus which can infer a user's emotional state using a probabilistic model method and adaptively express the emotion on the basis of the inferred result.

[Background]

Recently, the spread of Internet technology widely extends as far as to a wireless Internet. The enables an Internet user to communicate with another user having a wired or wireless communication terminal using a connected computer, and communicate with him or her even while being in motion using a mobile communication terminal such as PDA (personal digital assistant), laptop computer, mobile phone and smart phone. In addition to the voice communication and data file exchange, such wired and wireless communications enable a user to talk to another user through a text message using a messenger service or to form a new online community by visiting Blog of his/her own or other communication user to make text messages or to upload images or moving pictures.

While communicating in an online community, one sometimes needs to express his/her emotional states to other users or to guess emotional states of other users like in an offline community. For this purpose, online community service providers offer services to express or guess emotional states of users in a variety of ways. For example, a community service provider who uses a messenger service provides a variety of emoticon selection menus corresponding to emotional states, so that users can express their emotional states through a chat window by selecting emoticons depending on their emotional states. Further, the community service may search for whether there are specific words in sentences input by a user through a chat window or a bulletin board and display corresponding icons when the specific words are searched for, whereby emotional expressions are made automatically for the input sentences.

In general, emotions of humans are not constant but changed from moment to moment depending on situations, locations, atmospheres and so on. Therefore, it is very troublesome for users to alter their expression of emotional states changing depending on situations or atmospheres as such by selecting emoticons each time.

Further, emotion or feeling has quite personal attributes, and psychological factors to determine such human emotion can be generally classified into fright, fear, hatred, anger, joy, happiness and sadness. However, psychological factors felt by persons for the same situation may be different from one to another, and emotional intensity expressed by persons also may be different from one to another. Nevertheless, it may not be a correct expression for a current emotional state of a user to uniformly express the user's emotion by searching for a specific word out of a sentence input by the user.

[Disclosure]

[Technical Problem]

Therefore, the present disclosure has been made in an effort to provide an intelligent emotional word expanding apparatus and an expanding method therefor, capable of expanding an emotional word dictionary intelligently, in an intelligent emotion inferring apparatus in which a user's emotional state can be inferred using a probabilistic model method and express the emotion adaptively on the basis of the inferred result.

[Summary]

At least one aspect of this description relates to an intelligent emotional word expanding apparatus. The intelligent emotional word expanding apparatus includes a word dictionary storing module configured to classify emotional words into items including at least one of similarity, positivity or negativity, and emotional intensity using emotion classes including a basic emotion group which classifies human emotions and a detailed emotion group which classifies the basic emotion group, store the classified emotional words in an emotional word dictionary, and store neutral words together with the number of calls thereof in a neutral word dictionary. Further, the intelligent emotional word expanding apparatus includes an emotion inferring module configured to capture words and phrases of a sentence logged by a user, convert the words and phrases into basic formats, and infer emotions on the basis of the converted words or phrases and the emotional word dictionary. Further, the intelligent emotional word expanding apparatus includes a word expanding module configured to determine whether a word or a phrase is neutral on the basis of the neutral word dictionary when emotions are not inferred by the emotion inferring module, measure a relevance to the emotion class in the emotional word dictionary when the word or phrase is not neutral, and add the word or phrase to the emotional word dictionary when the measured relevance to the emotion class exceeds a threshold value.

According to at least one embodiment of the present disclosure, the emotion inferring module may include a sentence converting unit configured to capture words and phrases of the sentence logged by a user and converting the words and phrases into basic formats. Further, the emotion inferring module may include a match-checking unit configured to check whether the converted words and phrases match with the word or phrase stored in the emotional word dictionary. Further, the emotion inferring module may include an emotion inferring unit configured to apply a probabilistic model on the basis of a co-occurrence of the converted words and phrases, and to infer emotions on the basis of the applied probabilistic model.

According to at least one embodiment of the present disclosure, the emotion inferring unit may include a Web search preparing unit configured to generate word set information made by dividing or merging in N-gram scheme the converted words and phrases that do not exist in the emotional word dictionary. Further, the emotion inferring unit may include a Web mining unit configured to generate collection information produced by a Web search that collects words and phrases including the word set information. Here, the probabilistic model may be applied on the basis of the co-occurrence of the collection information.

According to at least one embodiment of the present disclosure, the match-checking unit may classify parts of speech in grammar for a language corresponding to the converted words and phrases and generate weight applied information in which weights predetermined according to the parts of speech are given to the converted words and phrases. Further, the emotion inferring unit may apply the probabilistic model on the basis of the co-occurrence of the weight applied information.

According to at least one embodiment of the present disclosure, the word expanding module may include a neutrality determining unit configured to determine whether the relevant word or phrase is neutral. Further, the word expanding module may include a neutral word adder configured to increase, when the relevant word or phrase is neutral, the number of accumulated calls of the word or phrase matched with the neutral word dictionary, or add the word or phrase and count the number of accumulated calls.

According to at least one embodiment of this description, the word expanding module may further include a change determining unit configured to determine, in a predetermined period of time, whether the neutral word changes to an emotional word on the basis of the number of accumulated calls for the neutral word stored in the neutral word dictionary. The word expanding module may further include an emotional word adder configured to add to the emotional word dictionary the neutral word that is determined to have been changed to the emotional word by the change determination unit.

According to at least one embodiment of this description, the word expanding module may include a neutrality determining unit configured to determine whether the word or phrase is neutral. Further, the word expanding module may include a relevance measuring unit configured to measure a relevance to the emotion class classified in the emotional word dictionary, when the word or phrase is not neutral. Further, the word expanding module may include an emotional word adder configured to add the word or phrase to the emotional word dictionary on the basis of the emotion class whose measured relevance exceeds a threshold value.

According to at least one embodiment of this description, the word expanding module may further include a Web browsing unit configured to browse for a predetermined Web site by calling a Web browsing function. The word expanding module may further include a log information obtaining unit configured to obtain log information for the word or phrase from the Web site. Here, the relevance may be specified on the basis of the obtained log information.

At least one aspect of this description relates to an intelligent emotional word expanding method. The intelligent emotional word expanding method includes classifying emotional words into items including at least one of similarity, positivity or negativity, and emotional intensity using emotion classes including a basic emotion group which classifies human emotions and a detailed emotion group which classifies the basic emotion group, storing the classified emotional words in an emotional word dictionary, and storing neutral words together with the number of accumulated calls thereof in a neutral word dictionary. The intelligent emotional word expanding method includes capturing words and phrases of a sentence logged by a user, converting the words and phrases into basic formats, and inferring emotions on the basis of the converted words or phrases and the emotional word dictionary. The intelligent emotional word expanding method includes determining whether a word or a phrase is neutral on the basis of the neutral word dictionary when emotions are not inferred by the emotion inferring module, measuring a relevance to the emotion class in the emotional word dictionary when the word or phrase is not neutral, and adding the word or phrase to the emotional word dictionary when the measured relevance to the emotion class exceeds a threshold value.

According to at least one embodiment of the present disclosure, the inferring may include capturing words and phrases of the sentence logged by a user and converting the words and phrases into basic formats. The inferring may include checking whether the converted words and phrases match with the word or phrase stored in the emotional word dictionary. The inferring may include applying a probabilistic model on the basis of a co-occurrence of the converted words and phrases. Here, emotions may be inferred on the basis of the applied probabilistic model.

According to at least one embodiment of the present disclosure, the applying may include performing a Web browsing preparation to generate word set information made by dividing or merging in N-gram scheme the converted words and phrases that do not exist in the emotional word dictionary. The applying may include performing a Web mining to generate collection information produced by a Web search that collects words and phrases including the word set information. Here, the probabilistic model may be applied on the basis of the co-occurrence of the collection information.

According to at least one embodiment of the present disclosure, the checking may include classifying parts of speech in grammar for a language corresponding to the converted words and phrases and generating weight applied information in which weights predetermined according to the parts of speech are given to the converted words and phrases. Here, the inferring may include applying the probabilistic model on the basis of the co-occurrence of the weight applied information.

According to at least one embodiment of the present disclosure, the adding may include determining whether the word or phrase is neutral. The adding may include increasing the number of accumulated calls for the word or phrase matched with the neutral word dictionary, or adding the word or phrase and counting the number of accumulated calls, when the word or phrase is neutral.

According to at least one embodiment of the present disclosure, the adding may further include determining whether the neutral word to an emotional word in a predetermined period of time on the basis of the number of accumulated calls for the neutral word stored in the neutral word dictionary. The adding may further include adding the neutral word determined to have been changed to the emotional word in the change determining to the emotional word dictionary.

According to at least one embodiment of the present disclosure, the adding may include determining whether the word or phrase is neutral. The adding may include measuring a relevance to the emotion classes classified in the emotional word dictionary, when the word or phrase is not neutral. Here, the word or phrase may be added to the emotional word dictionary on the basis of an emotion class whose measured relevance exceeds a threshold value.

According to at least one embodiment of the present disclosure, the adding may further include browsing a predetermined Web site by calling a Web browsing function. The adding may further include obtaining log information for the word or phrase from the Web site. Here, the relevance is specified on the basis of the obtained log information.

[Advantageous Effects]

According to at least one embodiment as described above, an emotional word dictionary can be continuously expanded by measuring a relevance to an emotional word whose emotion is not inferred and then adding it to an emotional word dictionary, or adding to the emotional word dictionary a neutral word that is changed to an emotional word by a user.

[Description of Drawings]

FIG. 1 is a schematic diagram of an intelligent emotional word expanding apparatus according to at least one embodiment of the present disclosure;

FIG. 2 is a diagram illustrating an example of an emotional word dictionary according to at least one embodiment of the present disclosure;

FIG. 3 is a schematic diagram illustrating a construction of an emotion inferring module shown in Fig. 1;

FIG. 4 is a diagram illustrating an example of emotional log information in an emotional log storing unit of an emotion inferring module shown in Fig. 3;

FIG. 5 is a schematic diagram illustrating a construction of a word expanding module shown in Fig. 1;

Fig. 6 is a diagram illustrating an example of checking whether a neutral word is overlapped using a neutral word adder shown in Fig. 5;

Fig. 7 is a diagram illustrating an example of obtaining log information using a Web browsing unit of a word expanding module shown in Fig. 5; and

Fig. 8 is a flowchart illustrating an intelligent emotional word expanding method according to at least one embodiment of the present disclosure.

[Detailed Description]

Hereinafter, at least one embodiment of the present disclosure will be described in detail with reference to the accompanying drawings. In the following description, like reference numerals designate like elements although the elements are shown in different drawings. Further, in the following description of the at least one embodiment, a detailed description of known functions and configurations incorporated herein will be omitted for the purpose of clarity and for brevity.

Additionally, in describing the components of the present disclosure, terms like first, second, A, B, (a), and (b) are used. These are solely for the purpose of differentiating one component from another, and one of ordinary skill would understand the terms are not to imply or suggest the substances, order or sequence of the components. If a component is described as 'connected', 'coupled', or 'linked' to another component, one of ordinary skill in the art would understand the components are not necessarily directly 'connected', 'coupled', or 'linked' but also are indirectly 'connected', 'coupled', or 'linked' via a third component.

FIG. 1 is a schematic diagram of an intelligent emotional word expanding apparatus according to at least one embodiment of the present disclosure. Referring to Fig. 1, an intelligent emotional word expanding apparatus according to at least one embodiment of the present disclosure may include a word dictionary storing module 100, an emotion inferring module 300 and a word expanding module 500.

The word dictionary storing module 100 classifies emotional words into items including at least one of similarity, positivity or negativity and emotional intensity using emotion classes comprising a basic emotion group which classifies human emotions and a detailed emotion group which classifies the basic emotion group, and stores them in an emotional word dictionary. Here, the basic emotion group may be formed of about eight groups and the detailed emotion group may be formed of about 33 groups, to which both emotion groups are not limited. Further, a synthetic emotion group may be formed by combining the basic emotion group with the detailed emotion group. The basic, detailed and synthetic emotion groups may be included in emotion class, and the emotion class may be applied to an emotion module. Further, the word dictionary storing module 100 stores neutral words together with the number of accumulated calls in a neutral word dictionary. Emotion is defined as a state of feeling that results in stimulus or stimulus change. Emotion is dependent on psychological factors such as surprise, fear, hatred, anger, pleasure, happiness, and sadness. By the way, individuals may feel different emotions to the same stimulus, and the emotional intensity may also be different. In consideration of such states, the word dictionary storing module 100 classifies the emotional words such as happy, ashamed and dejected into respective emotion classes, classifies the classified emotion classes based on the similarity, the positivity or negativity, and the emotional intensity, and stores the emotional words in the emotional word dictionary. Here, the emotion classes are the classification of human's internal feeling states such as satisfaction, longing, and happiness.

In at least one embodiment of the present disclosure, the emotional words are classified into a total of seventy-seven emotion classes and may be matched with the relevant emotion class. Here, the number of the emotion classes is merely an example of kinds of classifiable emotions and is not limited thereto. The similarity represents a likeness between the relevant word and the item of the emotion class and may be expressed as a value within a predetermined range. The positivity or negativity is a level that represents whether the attribute of the relevant word is a positive emotion or a negative emotion and may be expressed as a positive value or a negative value within a predetermined range with zero as a reference value. The emotional intensity represents the strength of emotion among the attributes of the relevant word and may be expressed as a value within a predetermined range. FIG. 2 is a diagram illustrating an example of an emotional word dictionary according to at least one embodiment of the present disclosure. In FIG. 2, the similarity was expressed as a value within a range of 0 to 10, the positivity or negativity was expressed as a value of 0, 1 or -1, and the emotional intensity was expressed as a value within a range of 0 to 10. However, these values are not limited to the shown ranges and various modifications can be made thereto. For example, the positivity or negativity may be expressed as a value of unit of 0.1 within a range of -1 to 1, and the similarity or the emotional intensity may also be expressed as a value of unit of 0.1 within a range of 0 to 1. Further, an emotional word storing unit may classify the same word into a plurality of emotion classes, like "ashamed", "warm", and "touching" shown in Fig.2. In this case, each of the classified emotion classes may be classified based on at least one of the similarity, the positivity or negativity, and the emotional intensity and then stored in the emotional word dictionary. Moreover, even in case of the same emotional word, the emotion class, the similarity, the positivity or negativity, and the emotional intensity may be differently recognized according to environment information including at least one of input time of a sentence logged by a user, location, and weather. Additionally, the emotion class, the similarity, the positivity or negativity, and the emotional intensity may vary according to profile information including a user's gender, age, character, and occupation. In a case where at least one of the emotion class, the similarity, the positivity or negativity, and the emotional intensity is differently inferred, an emotional word storing unit may set an emotional word dictionary for each user on the basis of emotional log information for each user and store it.

The emotion inferring module 300 captures words and phrases of a sentence logged by a user, converts the words and phrases into basic formats, and infers emotion on the basis of the converted words, phrases and emotional word dictionary.

The word expanding module 500 determines whether a word or a phrase is neutral on the basis of the neutral word dictionary stored in the word dictionary storing module 100 when the emotion is not inferred by the emotion inferring module 300, measures a relevance to the emotion classes in the emotional word dictionary when the word or phrase is not neutral, and adds the word or phrase to the emotional word dictionary when the measured relevance to the emotion class exceeds a threshold value.

FIG. 3 is a schematic diagram illustrating a construction of an emotion inferring module shown in Fig. 1. Referring to Fig. 3, the emotion inferring module 300 may include a sentence converting unit 310, a match checking unit 320, an emotion inferring unit 330, an emotional log storing unit 340 and a log information search unit 350. Here, although it is described that the emotion inferring module 300 infers emotion on the basis of a sentence input by a user, the present embodiment may also be applied to an apparatus in which emotion is inferred on the basis of a voice input by a user. In this case, emotion may be inferred on the basis of tone or tone-color of a user's voice, and the method of classifying tone or tone-color is known in the art so that its description will be omitted.

The sentence converting unit 310 may capture words and phrases of a sentence logged by a user and convert them into basic formats. That is, the sentence converting unit 310 may primarily segment the sentence logged by the user into a plurality of words and then convert the segmented words into basic formats. In addition, the sentence converting unit 310 may capture phrases on the basis of idiomatically used words or word combinations among the segmented words and then convert the captured phrases into basic formats.

The match checking unit 320 checks the matched words or phrases by comparing the respective words and phrases converted by the sentence converting unit 310 with the emotional word dictionary stored in the word dictionary storing module 100. Meanwhile, the match checking unit 320 classifies parts of speech in grammar for a language corresponding to the words and phrases converted by the sentence converting unit 310, and generates weight applied information in which weights predetermined according to the parts of speech are given to the converted words and phrases. When the match checking unit 320 generates the weight applied information, the emotion inferring unit 330 can apply a probabilistic model on the basis of a co-occurrence of the weight applied information. That is, the match checking unit 320 can check a role of each part of speech in the words and phrases converted by the sentence converting unit 310, and give weights according the roles. Here, the weights also can be expressed in an empirical value.

The emotion inferring unit 330 may apply a probabilistic model on the basis of a co-occurrence of the converted words and phrases and then infer the emotion according to the probabilistic model applied. For example, when assuming that a word "overwhelmed" among the words that have been converted into the basic formats by the sentence converting unit 310 is matched with an emotion class "touching" of the emotional word dictionary, the emotion inferring unit 330 may apply the probabilistic model based on a combination of the word "overwhelmed" and another word or phrase converted into the basic format and then infer the emotion based on the probabilistic model applied. Here, the probabilistic model is an algorithm for calculating a probability of belonging to a specific emotion by using the frequency of a specific word or phrase in an entire corpus. Based on the probabilistic model, a probability that a new word will belong to a specific emotion can be calculated. For example, as expressed in Equation 1 below, the emotion similarity to a new word can be conjectured by calculating the frequency of the combination of a new word (W) and a specific emotion (C) in the sentence within the corpus for the total frequency of the new word (W) within the corpus.

$$\text{Emotion Similarity}(W,C)=\frac{\text{Frequency of Comb. of New Word W and Specific Emotion C in Sentence within Corpus}}{\text{Total Frequency of New Word W within Corpus}}$$

Equation 1

In addition, a pointwise mutual information (PMI) may be used for calculation of co-occurrence similarity of word. In this case, the PMI may be calculated using Equation 2 below.

$$PMI(W,C)=\frac{\text{Frequency of Comb. of New Word W and Specific Emotion C in Sentence within Corpus}}{(\text{Total Frequency of New Word W within Corpus})*(\text{Frequency of Particular Emotion C within Corpus})}$$

Equation 2

As an equation similar to the PMI, a dice coefficient Dice (W,C) may be used.

$$Dice(\mathrm{W},\mathrm{C}) = \frac{\begin{array}{c}2 * (\text{Frequency of Comb. of New Word W and Specific}\\ \text{Emotion C in Sentence within Corpus})\end{array}}{\begin{array}{c}(\text{Total Frequency of New Word W within Corpus}) +\\ (\text{Frequency of Particular Emotion C within Corpus})\end{array}}$$

Equation 3

The calculation formula for conjecturing the emotion similarity is not limited to the proposed equations and various modifications can be made thereto.

In this manner, the emotion inferring unit 330 may infer the emotions for <word + word>, <word + phrase> and <phrase + phrase> and then infer the emotion of the entire sentence by combining the respective inferred emotions.

Meanwhile, the emotion inferring unit 330 includes a Web search preparing unit 332 and a Web mining unit 334. The Web search preparing unit 332 generates word set information made by dividing or merging in N-Gram scheme the converted words and phrases that do not exist in the emotional word dictionary. The Web mining unit 334 generates collection information produced by a Web search that collects words and phrases including the word set information of the Web search preparing unit 332 from a Web. That is, the emotion inferring unit 330 can apply the probabilistic model based on a co-occurrence of the collection information of the Web mining unit 334. Here, the N-Gram includes at least one of Bigram, Monogram and Trigram. That is, the N-Gram refers to a word sequence consisted of N word pairs when presuming a language model, the Monogram refers to a word sequence consisted of one word pair, and the Trigram refers to a word sequence consisted of three word pairs. Meanwhile, the Web mining refers to a data mining technology (procedure to discover an available correlation concealed in a lot of data, extract executable information and utilize it for decision making) in order to discover meaningful patterns, profiles and trends from a Web resource. Utilizing fields of such Web mining may include information filtering, competitor technology development monitoring, mining of Web access log for availability analysis, and browsing (browsing a user's moving path in a Web) support.

The emotional log storing unit 340 can store an emotional log formed to include word and word, word and phrase, and phrase and phrase on the basis of words or phrases checked by the match checking unit 320. That is, the emotional log storing unit 340 can store sentences logged by a user as a combination of meaningful word and word, word and phrase, and phrase and phrase, in order to make an emotion conjecture for a new word. For example, the emotional log storing unit 340 may generate and store two emotional logs of <wanso-love> and <friend-love> by combining a basic format word "love", which is checked as having the emotion of "loving" by the match-checking unit 320, with the words "wanso" and "friend", which have no emotion within the sentence, wherein the word "wanso" is a Korean chatting language abbreviation for 'absolutely precious'. In this case, the emotional logs may be stored together with time information as shown in Fig. 4. The information stored together with the emotional log information is not limited to the time information, and weather information and user position information may also be stored together with the emotional log information.

The log information search unit 350 can search for whether there is log information whose value is equal to or more than a predetermined value for the log information stored in the emotional log storing unit 340. That is, the log information search unit 350 searches for whether the number of the log information stored in the emotional log storing unit 340 is equal to or more than the predetermined value. At this time, the emotion inferring unit 330 is configured to infer the emotion for the phrase or sentence combined with a specific word or phrase only when the specific word or phrase are stored a predetermined times or more in the emotional log storing unit 340 by the log information search unit 350.

FIG. 5 is a schematic diagram illustrating a construction of a word expanding module shown in Fig. 1. Referring to Fig. 5, the word expanding module 500 may include a neutrality determining unit 510, a neutral word adder 520, a change determining unit 530, an emotional word adder 540, a relevance measuring unit 550, a Web search unit 560 and a log information obtaining unit 570.

The neutrality determining unit 510 determines whether a specific word or phrase is neutral. Here, the neutrality means that the emotion for the word or phrase does not exist. Generally, a title of animal or thing such as a puppy and a desk, a reference term such as I, You and We, and name of person can be determined as neutral words. In this case, the word dictionary storing module 100 stores neutral words or phrases in the neutral word dictionary, and the neutral word adder 520 can increase the number of accumulated calls of the word or phrase that is determined to be neutral by the neutrality determining unit 114, when the word or phrase is matched with the neutral word dictionary, or add the word or phrase to the neutral word dictionary and then start to count the number of the accumulated calls.

The change determining unit 530 can determine in a predetermined period whether the neutral words change to emotional words on the basis of the number of accumulated calls for the neutral words of the neutral word dictionary that are stored in the word dictionary storing module 100. At this time, when the change determining unit 530 determines that the number of accumulated calls for a specific neutral word exceeds a predetermined threshold value, it can be determined that the neutral word has been changed to an emotional word. In this case, the emotional word adder 540 can add the neutral word determined to have been changed to an emotional word to the emotional word dictionary.

Fig. 6 is a diagram illustrating an example of checking whether a neutral word is overlapped using a neutral word adder shown in Fig. 5. As described above, in case that a neutral word can change to a new emotional word, the neutral word dictionary stores a neutral word together with the frequency that the neutral word is used with an emotional word (also referred to as 'the number of accumulated calls'). Then, when the frequency exceeds a predetermined specific threshold value, the neutral word can additionally be stored in the emotional word dictionary. For example, while words such as "I", "You" and "Supermarket" are neutral, which we usually use, their emotional values are not inclined to any one side even though they are Web-browsed, so that they cannot obtain a specific emotion. So, all of these words are stored in the neutral word dictionary together with the frequency of the words. The frequency of word is stored together in consideration that the meaning of the neutrality word may change and have emotion. Therefore, the frequency is checked in a predetermined period and then the change to the emotional word can be applied. Referring to Fig. 6, it can be understood that when the log analysis is performed using the words of "I', "You" and "Supermarket" stored in the neutral word dictionary, the number of accumulated calls is added by 1 for each word, and unnecessary operations for the neutral word can be omitted since separate analysis or Web browsing is not performed.

The relevance measuring unit 550 can measure a relevance to the emotion classes classified in the emotional word dictionary when the specific word or phrase is not neutral. That is, the relevance measuring unit 550 can measure the relevance of the words or phrases that are not neutral on the basis of all emotion classes that are classified in the emotional word dictionary. At this time, the relevance can be measured by calculating a probability based on the probabilistic model described above. Further, when a word or phrase matched with the word or phrase exists in the emotional word dictionary, a measurement of the relevance of the word or phrase based on the all other emotion classes can be omitted. In this case, when the relevance based on a specific class exceeds a predetermined threshold value, the emotional word adder 540 can add the word or phrase to the emotional word dictionary. If the emotion class whose relevance exceeds the predetermined threshold value for the word or phrase is plural, the word or phrase may be sequentially stored in the emotional word dictionary in order of relevance.

When the neutrality determining unit 510 determines that a specific word or phrase is not neutral, the Web browsing unit 560 can call a Web browsing function and browse a predetermined Web site. In this case, the log information obtaining unit 570 can obtain log information for the word or phrase from the Web site. For example, when browsing a Web site for a word "Vuvuzela", the Web browsing unit 560 can obtain log information such as <Vuvuzela, chafe>, <Vuvuzela, distressed> from the relevant Web site as shown in Fig. 7. At this time, when log information for the word or phrase is obtained on the basis of log information browsed from a Web site using the Web browsing unit 560, the relevance measuring unit 550 can measure a frequency for the word or phrase on the basis of the obtained log information and measure a relevance according to the emotion classes. Further, when the relevance measured by the relevance measuring unit 550 exceeds a predetermined threshold value, the emotional word adder 540 can add and store the word or phrase, inferred emotion, and emotion quotient in the emotional word dictionary. For example, in case of measuring the relevance by calculating a probability using the three probabilistic models described above, when the value calculated by any one of the three probabilistic models exceeds a predetermined threshold value, the word or phrase, inferred emotion, and emotion quotient can be added and stored in the emotional word dictionary.

Fig. 8 is a flowchart illustrating an intelligent emotional word expanding method according to at least one embodiment of the present disclosure. The intelligent emotional word expanding method according to at least one embodiment of the present disclosure will be described in detail with reference to Figs. 1, 3 and 5.

The word dictionary storing module 100 classifies emotional words into items including at least one of similarity, positivity or negativity, and emotion intensity, using emotion classes including a basic emotion group which classifies human emotions and a detailed emotion group which classifies the basic emotion group, and stores the words in an emotional word dictionary, and stores neutral words together with the number of their accumulated calls in a neutral word dictionary (S801). Here, the basic emotion group can be formed of about eight groups and the detailed emotion group can be formed of about thirty three groups, but the group number is not limited thereto. Further, a synthetic emotion group may be formed by combining the basic emotion group with the detailed emotion group. The basic, detailed and synthetic emotion groups may be included in emotion class, and the emotion class may be applied to an emotion module. Further, in step S801, the word dictionary storing module 100 can classify the same emotional word into a plurality of emotion classes. In this case, the word dictionary storing module 100 can classify respective classified emotion classes on the basis of at least one of similarity, positivity or negativity and emotion intensity and store them in the emotional word dictionary. Further, when at least one of emotional class, similarity, positivity or negativity, and emotional intensity is inferred differently according to environment information including at least one of input time of a sentence logged by a user, location, and weather and profile information including a user's gender, age, character and occupation, the word dictionary storing module 100 may set and store an emotional word dictionary for each user on the basis of the emotional log information for each user.

The sentence converting unit 310 captures words and phrases for a sentence logged by the user and converts them into basic formats (S803). That is, the sentence converting unit 310 can primarily segment the sentence logged by the user into a plurality of words and then convert them into basic formats. It can also capture the phrase on the basis of idiomatically used words and word combinations among the segmented words and then convert the captured phrases into the basic formats.

The match checking unit 320 compares respective words and phrases converted by the sentence converging unit 310 with the emotional word dictionary stored in the word dictionary storing module 100 and then checks the words or phrases matched (S805). In step S805, the match checking unit 310 can classify parts of speech in grammar for a language corresponding to the words and phrases converted by the sentence converting unit 104 and then generate weight applied information in which predetermined weights based on parts of speech are given to the converted words and phrases. In case that the match checking unit 320 generated the weight applied information, the emotion inferring unit 330 can apply a probabilistic model on the basis of a co-occurrence of the weight applied information. That is, the match checking unit 320 can check a role of each part of speech for the word and phrase converted by the sentence converting unit 310 and give weight according to the role. Here, the weight may also be expressed in an empirical value.

The emotional log storing unit 340 can store emotional log formed to include word and word, word and phrase, and phrase and phrase on the basis of the words or phrases checked by the match checking unit 320. That is, the emotional log storing unit 340 can store sentences logged by the user to make emotion conjecture for new words as combinations of meaningful word and word, word and phrase, and phrase and phrase. For example, the emotional log storing unit 340 may generate and store two emotional logs of <wanso-love> and <friend-love> by combining the basic format word "love", which is checked as having the emotion of "loving" by the match checking unit 320, with the words "wanso" and "friend", which have no emotion within the sentence, wherein the word "wanso" is a Korean chatting language abbreviation for "absolutely precious".

When log information which is equal to or more than a predetermined value is stored in the emotional log, the emotion inferring unit 330 can apply a probabilistic model on the basis of a co-occurrence of the converted words and phrases, and infer emotions according to the applied probabilistic model (S807). At this time, the emotion inferring unit 330 may be configured to infer the emotion for the phrase or sentence combined with the word or phrase only when the word or phrase has been stored a predetermined times set in the emotional log storing unit 340 or more through the log information search unit 350.

In step S807, the emotion inferring unit 330 generates word collection information produced by dividing or merging in N-Gram scheme the converted words and phrases that do not exist in an emotional word dictionary using the Web search preparing unit 332 included. Further, the emotion inferring unit 330 generates collection information produced by a Web search that collects words and phrases including word collection information of the Web search preparing unit 332 using the Web mining unit 334 included. That is, the emotion inferring unit 330 can apply the probabilistic model on the basis of the co-occurrence of the collection information by the Web mining unit 334.

The neutrality determining unit 510 determines whether a specific word or phrase is neutral (S809). Here, the neutrality means that the emotion for words or phrases does not exist. Generally, a title of animal or thing such as a puppy and a desk, a reference term such as I, You and We, and name of person can be determined as neutral words.

When the word or phrase is determined to be neutral, the neutral word adder 520 can increase the number of accumulated calls for the word or phrase that is determined to be neutral by the neutrality determining unit 510 and matched with the neutral word dictionary, or add the word or phrase to the neutral word dictionary and then start to count the number of the accumulated calls (S813).

The change determining unit 530 can determine in a predetermined period whether the neutral word changes to an emotional word on the basis of the number of the accumulated calls for the neutral word in the neutral word dictionary that is stored in the word dictionary storing module 100 (S815). At this time, when the change determining unit 530 determines that the number of the accumulated calls for a specific word exceeds a predetermined threshold value, it can be determined that the neutral word has been changed to an emotional word (S817). In this case, the emotional word adder 540 can add to the emotional word dictionary the neutral word determined to have been changed to an emotional word (S819).

When the neutrality determining unit 510 determines that a specific word or phrase is not neutral, the Web browsing unit 560 can call a Web browsing function to browse a predetermined Web site (S821). In this case, the log information obtaining unit 570 can obtain log information for the word or phrase from the Web site (S823). At this time, when the Web browsing unit 560 obtains log information for the word or phrase on the basis of the log information browsed from the Web site, the relevance measuring unit 550 can measure the frequency of the word or phrase on the basis of the obtained log information, and the relevance according to the emotion classes (S825). Further, when the relevance measured by the relevance measuring unit 550 exceeds a predetermined threshold value (S827), the emotional word adder 540 can add and store the word or phrase, inferred emotion, and emotional quotient in the emotional word dictionary (S829). For example, in case that the relevance is measured by calculating a probability using the three probabilistic models described above, when the value calculated by any one of the three probabilistic models exceeds a predetermined threshold value, the word or phrase, inferred emotion, and emotional quotient can be added and stored in the emotional word dictionary.

In the description above, although all of the components of the embodiments of the present disclosure may have been explained as assembled or operatively connected as a unit, one of ordinary skill would understand the present disclosure is not limited to such embodiments. Rather, within some embodiments of the present disclosure, the respective components are selectively and operatively combined in any number of ways. Every one of the components are capable of being implemented alone in hardware or combined in part or as a whole and implemented in a computer program having program modules residing in computer readable media and causing a processor or microprocessor to execute functions of the hardware equivalents. Codes or code segments to constitute such a program are understood by a person skilled in the art. The computer program is stored in a non-transitory computer readable media, which in operation realizes the embodiments of the present disclosure. The computer readable media includes magnetic recording media, optical recording media or carrier wave media, in some embodiments.

In addition, one of ordinary skill would understand terms like 'include', 'comprise', and 'have' to be interpreted in default as inclusive or open rather than exclusive or closed unless expressly defined to the contrary. All the terms that are technical, scientific or otherwise agree with the meanings as understood by a person skilled in the art unless defined to the contrary. One of ordinary skill would understand common terms as found in dictionaries are interpreted in the context of the related technical writings not too ideally or impractically unless the present disclosure expressly defines them so.

Although exemplary embodiments of the present disclosure have been described for illustrative purposes, those skilled in the art will appreciate that various modifications, additions and substitutions are possible, without departing from the essential characteristics of the disclosure. Therefore, exemplary embodiments of the present disclosure have been described for the sake of brevity and clarity. Accordingly, one of ordinary skill would understand the scope of the disclosure is not limited by the explicitly described above embodiments but by the claims and equivalents thereof.

CROSS-REFERENCE TO RELATED APPLICATION

If applicable, this application claims priority under 35 U.S.C §119(a) of Patent Application No. 10-2010-0106313, filed on October 28, 2010 and Patent Application No. 10-2011-0110700, filed on October 27, 2011 in Korea, the entire contents of which are incorporated herein by reference. In addition, this non-provisional application claims priorities in countries, other than the U.S., with the same reason based on the Korean Patent Applications, the entire contents of which are hereby incorporated by reference.

## Claims

**1.** An intelligent emotional word expanding apparatus, comprising:

a word dictionary storing module configured to classify emotional words into items including at least one of similarity, positivity or negativity, and emotional intensity using emotion classes including a basic emotion group which classifies human emotions and a detailed emotion group which classifies the basic emotion group, to store the classified emotional words in an emotional word dictionary, and to store neutral words together with the number of calls thereof in a neutral word dictionary;
an emotion inferring module configured to capture words and phrases of a sentence logged by a user, to convert the words and phrases into basic formats, and to infer emotions on the basis of the converted words or phrases and the emotional word dictionary; and
a word expanding module configured to determine whether a word or a phrase is neutral on the basis of the neutral word dictionary when emotions are not inferred by the emotion-inferring module, to measure a relevance to the emotion class in the emotional word dictionary when the word or phrase is not neutral, and to add the word or phrase to the emotional word dictionary when the measured relevance to the emotion class exceeds a threshold value.

**2.** The apparatus of claim 1, wherein the emotion inferring module includes:

a sentence converting unit configured to capture words and phrases of the sentence logged by a user and convert the words and phrases into basic formats;

a match-checking unit configured to check whether the converted words and phrases match with the word or phrase stored in the emotional word dictionary; and
an emotion-inferring unit configured to apply a probabilistic model on the basis of a co-occurrence of the converted words and phrases, and to infer emotions on the basis of the applied probabilistic model.

**3.** The apparatus of claim 2, wherein the emotion-inferring unit includes:

a Web search preparing unit configured to generate word set information made by dividing or merging in N-gram scheme the converted words and phrases that do not exist in the emotional word dictionary; and
a Web mining unit configured to generate collection information produced by a Web search that collects words and phrases including the word set information,
wherein the probabilistic model is applied on the basis of the co-occurrence of the collection information.

**4.** The apparatus of claim 2, wherein the match-checking unit classifies parts of speech in grammar for a language corresponding to the converted words and phrases and generates weight applied information in which weights predetermined according to the parts of speech are given to the converted words and phrases, and the emotion-inferring unit applies the probabilistic model on the basis of the co-occurrence of the weight applied information.

**5.** The apparatus of claim 1, wherein the word expanding module includes:

a neutrality determining unit configured to determine whether the relevant word or phrase is neutral; and
a neutral word adder configured to increase, when the relevant word or phrase is neutral, the number of accumulated calls of the word or phrase matched with the neutral word dictionary, or add the word or phrase and counting the number of accumulated calls.

**6.** The apparatus of claim 5, wherein the word expanding module further includes:

a change determining unit configured to determine, in a predetermined period of time, whether the neutral word changes to an emotional word on the basis of the number of accumulated calls for the neutral word stored in the neutral word dictionary; and
an emotional word adder configured to add to the emotional word dictionary the neutral word that is determined to have been changed to the emotional word by the change determination unit.

**7.** The apparatus of claim 1, wherein the word expanding module includes:

a neutrality determining unit configured to determine whether the word or phrase is neutral;
a relevance measuring unit configured to measure a relevance to the emotion class classified in the emotional word dictionary, when the word or phrase is not neutral; and
an emotional word adder configured to add the word or phrase to the emotional word dictionary on the basis of the emotion class whose measured relevance exceeds a threshold value.

**8.** The apparatus of claim 7, wherein the word expanding module further includes:

a Web browsing unit configured to browse for a predetermined Web site by calling a Web browsing function; and
a log information obtaining unit configured to obtain log information for the word or phrase from the Web site,
wherein the relevance is specified on the basis of the obtained log information.

**9.** An intelligent emotional word expanding method, comprising:

classifying emotional words into items including at least one of similarity, positivity or negativity, and emotional intensity using emotion classes including a basic emotion group which classifies human emotions and a detailed emotion group which classifies the basic emotion group, storing the classified emotional words in an emotional word dictionary, and storing neutral words together with the number of accumulated calls thereof in a neutral word dictionary;
capturing words and phrases of a sentence logged by a user, converting the words and phrases into basic formats, and inferring emotions on the basis of the converted words or phrases and the emotional word dictionary; and
determining whether a word or a phrase is neutral on the basis of the neutral word dictionary when emotions are not inferred by the emotion-inferring module, measuring a relevance to the emotion class in the emotional word dictionary when the word or phrase is not neutral, and adding the word or phrase to the emotional word dictionary when the measured relevance to the emotion class exceeds a threshold value.

**10.** The method of claim 9, wherein the inferring includes:

capturing words and phrases of the sentence logged by a user and converting the words and phrases into basic formats;
checking whether the converted words and phrases match with the word or phrase stored in the emotional word dictionary; and
applying a probabilistic model on the basis of a co-occurrence of the converted words and phrases,
wherein emotions are inferred on the basis of the applied probabilistic model.

**11.** The method of claim 10, wherein the applying includes:

performing a Web browsing preparation to generate word set information made by dividing or merging in N-gram scheme the converted words and phrases that do not exist in the emotional word dictionary; and
performing a Web mining to generate collection information produced by a Web search that collects words and phrases including the word set information,
wherein the probabilistic model is applied on the basis of the co-occurrence of the collection information.

**12.** The method of claim 10, wherein the checking includes classifying parts of speech in grammar for a language corresponding to the converted words and phrases and generating weight applied information in which weights predetermined according to the parts of speech are given to the converted words and phrases,
wherein the inferring includes applying the probabilistic model on the basis of the co-occurrence of the weight applied information.

**13.** The method of claim 9, wherein the adding includes:

determining whether the word or phrase is neutral; and
increasing the number of accumulated calls for the word or phrase matched with the neutral word dictionary, or adding the word or phrase and counting the number of accumulated calls, when the word or phrase is neutral.

**14.** The method of claim 12, wherein the adding further includes:

determining whether the neutral word to an emotional word in a predetermined period of time on the basis of the number of accumulated calls for the neutral word stored in the neutral word dictionary; and
adding the neutral word determined to have been changed to the emotional word in the change determining to the emotional word dictionary.

**15.** The method of claim 9, wherein the adding includes:

determining whether the word or phrase is neutral; and
measuring a relevance to the emotion classes classified in the emotional word dictionary, when the word or phrase is not neutral;
wherein the word or phrase is added to the emotional word dictionary on the basis of an emotion class whose measured relevance exceeds a threshold value.

**16.** The method of claim 15, wherein the adding further includes:

browsing a predetermined Web site by calling a Web browsing function; and
obtaining log information for the word or phrase from the Web site,
wherein the relevance is specified on the basis of the obtained log information.

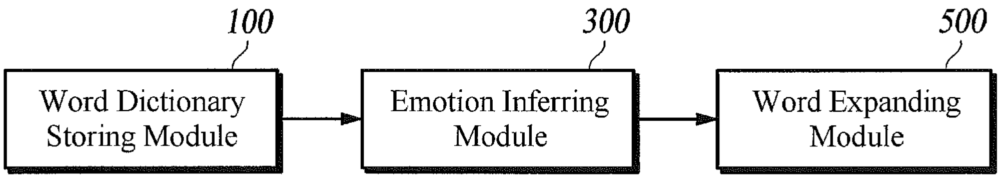
100
300
500
Word Dictionary Storing Module
Emotion Inferring Module
Word Expanding Module

FIG. 1

| Basic Form | 1st Emotion | | | | 2nd Emotion | | | |
|---|---|---|---|---|---|---|---|---|
| | Emotion Class | Similarity | Positive/ Negative | Emotion Intensity | Emotion Class | Similarity | Positive/ Negative | Emotion Intensity |
| Ashamed | Shyness | 8 | 0 | 2 | Romance | 5 | 1 | 1 |
| Depressed | Sadness | 6 | -1 | 2 | – | – | – | – |
| Warm | Happiness | 8 | 1 | 3 | Love | 3 | 1 | 2 |
| Big Success | Surprise | 9 | 0 | 4 | – | – | – | – |
| Touching | Impression | 8 | 1 | 4 | Sadness | 5 | -1 | 2 |
| ... | ... | ... | ... | ... | ... | ... | ... | ... |

*FIG. 2*

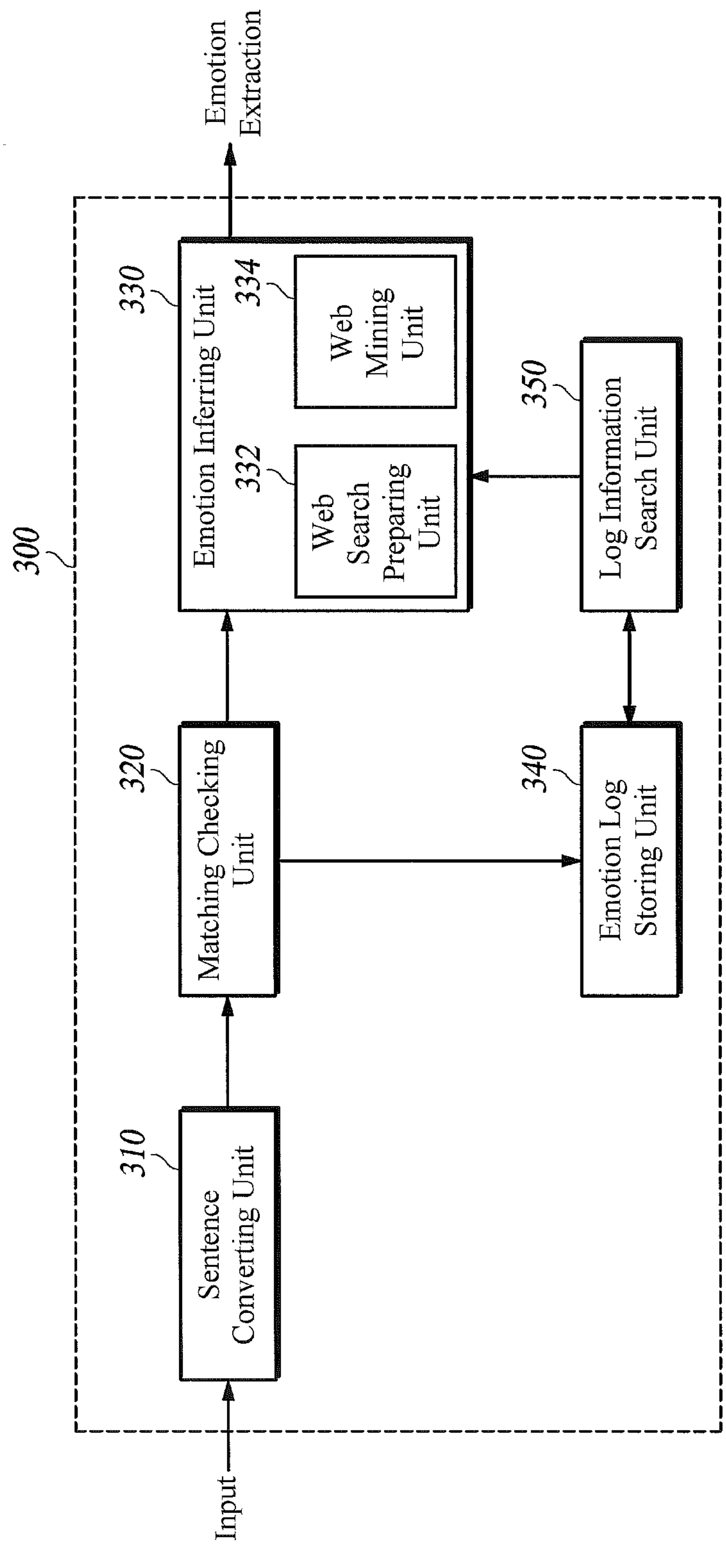
300
310
Sentence Converting Unit
320
Matching Checking Unit
330
Emotion Inferring Unit
332
Web Search Preparing Unit
334
Web Mining Unit
340
Emotion Log Storing Unit
350
Log Information Search Unit
Input
Emotion Extraction

FIG. 3

Thu June 10 19:12:57 KST 2010---Log : <I, Hungry>
Thu June 10 19:14:10 KST 2010---Log : <I, Touching>
Thu June 10 19:14:10 KST 2010---Log : <Song, Sad>
Fri July 30 22:31:22 KST 2010---Log : <Kim Yuna, Love>
Fri July 30 22:32:31 KST 2010---Log : <Puppy, Cute>
Fri July 30 22:32:31 KST 2010---Log : <Puppy, Like>

***FIG. 4***

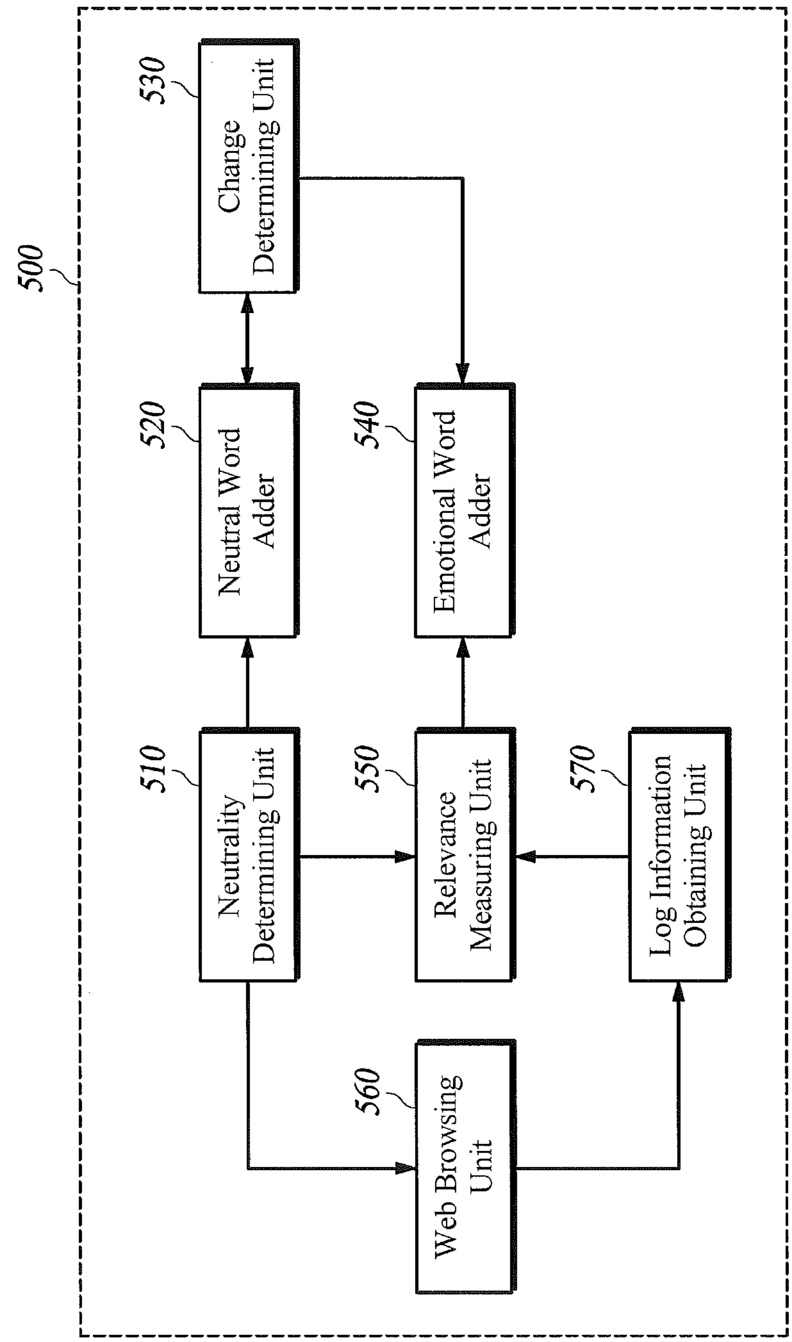
500
510
Neutrality Determining Unit
520
Neutral Word Adder
530
Change Determining Unit
540
Emotional Word Adder
550
Relevance Measuring Unit
560
Web Browsing Unit
570
Log Information Obtaining Unit

FIG. 5

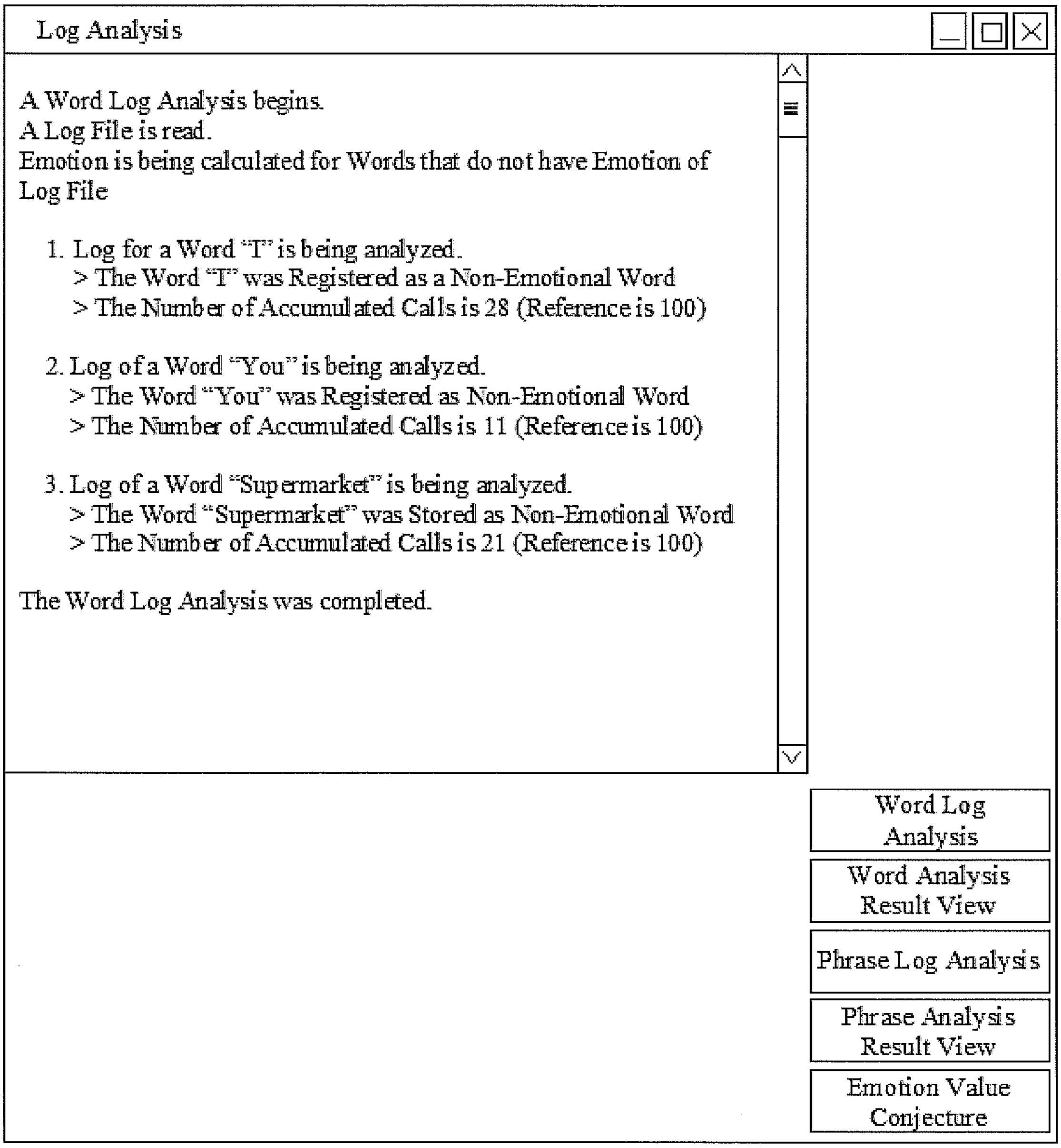
Log Analysis
A Word Log Analysis begins.
A Log File is read.
Emotion is being calculated for Words that do not have Emotion of Log File
1. Log for a Word "I" is being analyzed.
> The Word "I" was Registered as a Non-Emotional Word
> The Number of Accumulated Calls is 28 (Reference is 100)
2. Log of a Word "You" is being analyzed.
> The Word "You" was Registered as Non-Emotional Word
> The Number of Accumulated Calls is 11 (Reference is 100)
3. Log of a Word "Supermarket" is being analyzed.
> The Word "Supermarket" was Stored as Non-Emotional Word
> The Number of Accumulated Calls is 21 (Reference is 100)
The Word Log Analysis was completed.
Word Log Analysis
Word Analysis Result View
Phrase Log Analysis
Phrase Analysis Result View
Emotion Value Conjecture

*FIG. 6*

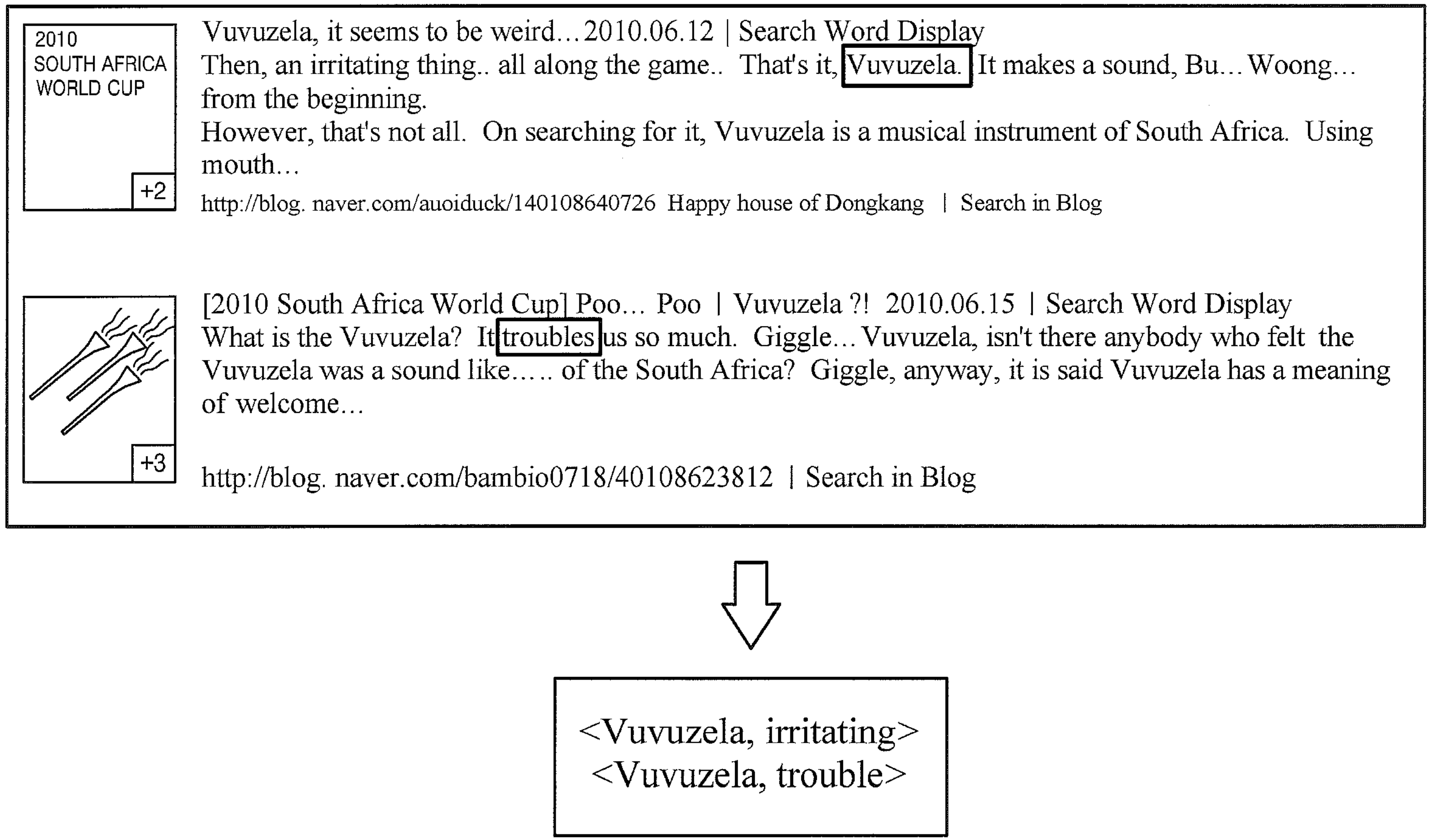
2010
SOUTH AFRICA
WORLD CUP
+2
Vuvuzela, it seems to be weird…2010.06.12 | Search Word Display
Then, an irritating thing.. all along the game.. That's it, Vuvuzela. It makes a sound, Bu…Woong… from the beginning.
However, that's not all. On searching for it, Vuvuzela is a musical instrument of South Africa. Using mouth…
http://blog. naver.com/auoiduck/140108640726 Happy house of Dongkang | Search in Blog
+3
[2010 South Africa World Cup] Poo… Poo | Vuvuzela ?! 2010.06.15 | Search Word Display
What is the Vuvuzela? It troubles us so much. Giggle…Vuvuzela, isn't there anybody who felt the Vuvuzela was a sound like….. of the South Africa? Giggle, anyway, it is said Vuvuzela has a meaning of welcome…
http://blog. naver.com/bambio0718/40108623812 | Search in Blog
<Vuvuzela, irritating>
<Vuvuzela, trouble>

*FIG. 7*

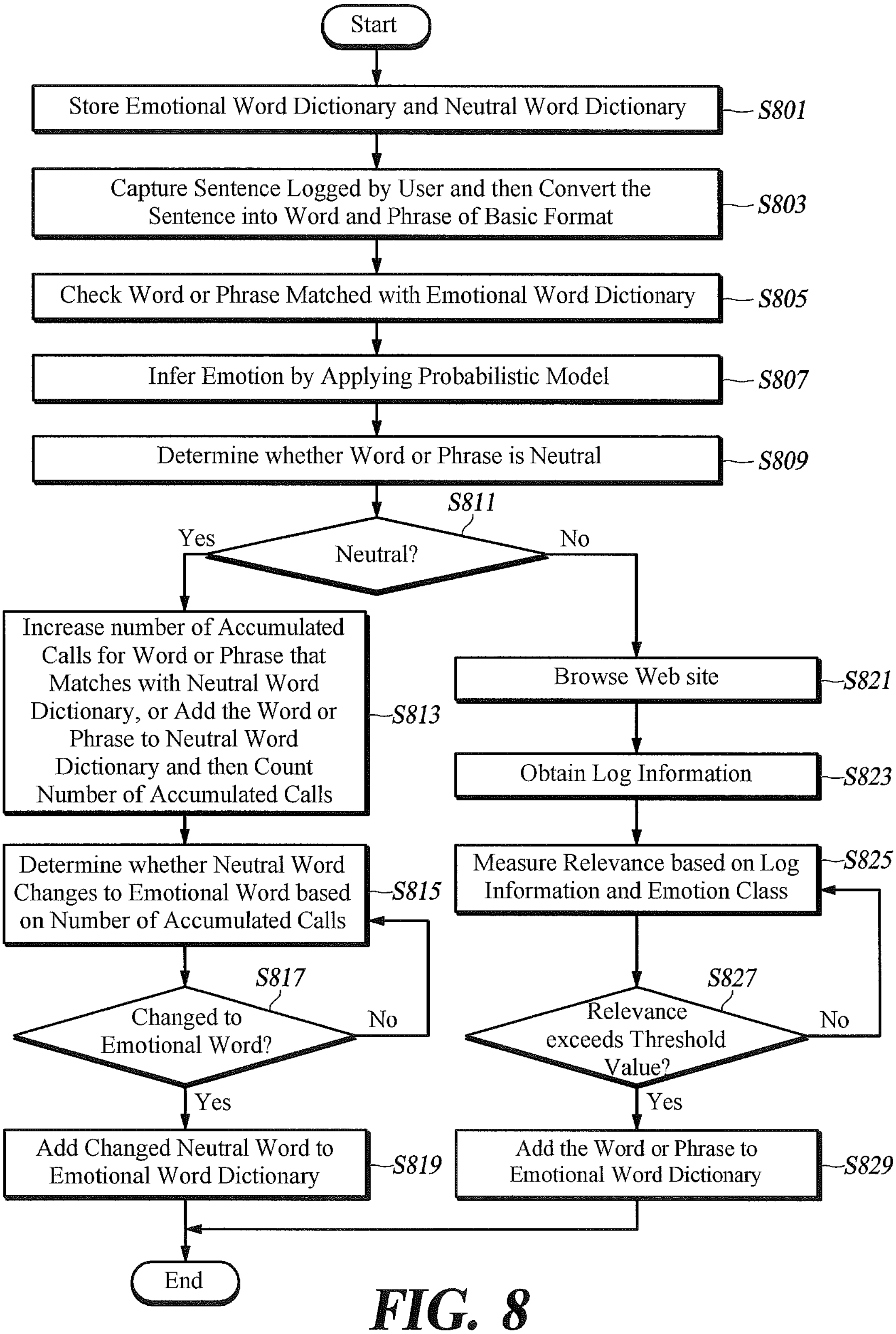
Start
Store Emotional Word Dictionary and Neutral Word Dictionary
S801
Capture Sentence Logged by User and then Convert the Sentence into Word and Phrase of Basic Format
S803
Check Word or Phrase Matched with Emotional Word Dictionary
S805
Infer Emotion by Applying Probabilistic Model
S807
Determine whether Word or Phrase is Neutral
S809
S811
Neutral?
Yes
No
Increase number of Accumulated Calls for Word or Phrase that Matches with Neutral Word Dictionary, or Add the Word or Phrase to Neutral Word Dictionary and then Count Number of Accumulated Calls
S813
Determine whether Neutral Word Changes to Emotional Word based on Number of Accumulated Calls
S815
S817
Changed to Emotional Word?
No
Yes
Add Changed Neutral Word to Emotional Word Dictionary
S819
Browse Web site
S821
Obtain Log Information
S823
Measure Relevance based on Log Information and Emotion Class
S825
S827
Relevance exceeds Threshold Value?
No
Yes
Add the Word or Phrase to Emotional Word Dictionary
S829
End

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020100106313
- KR 1020110110700